# EUROPEAN PATENT SPECIFICATION

(11) **EP 3 628 124 B1**
(45) Date of publication and mention of the grant of the patent: **01.12.2021**
(21) Application number: 18843627.3
(22) Date of filing: 10.08.2018
(51) Int. Cl.: H04N 9/73, G06N 3/08

(54) **SYSTEM AND METHOD FOR DETECTING LIGHT SOURCES IN A MULTI-ILLUMINATED ENVIRONMENT USING A COMPOSITE RGB-IR SENSOR**
SYSTEM UND VERFAHREN ZUR DETEKTION VON LICHTQUELLEN IN EINER MEHRFACH BELEUCHTETEN UMGEBUNG UNTER VERWENDUNG EINES ZUSAMMENGESETZTEN RGB-IR-SENSORS
SYSTÈME ET PROCÉDÉ DE DÉTECTION DE SOURCES DE LUMIÈRE DANS UN ENVIRONNEMENT À MULTI-ÉCLAIRÉ À L'AIDE D'UN CAPTEUR RGB-IR COMPOSITE

(30) Priority: 11.08.2017 IN 201641027634
(43) Date of publication of application: 01.04.2020
(73) Proprietor: Samsung Electronics Co., Ltd., Suwon-si, Gyeonggi-do 16677 (KR)
(72) Inventor: NAIR, Prajit Sivasankaran, Suwon-si Gyeonggi-do 16700 (KR); JUJJAVARAPU, Bala Siva Sashank, Bangalore Karnataka 560037 (IN); PAI, Narasimha Gopalakrishna, Karnataka 560037 (IN); KUMAR, Akshay, Bangalore Karnataka 560037 (IN)
(74) Representative: Walaski, Jan Filip
(86) International application number: PCT/KR2018/009213
(87) International publication number: WO 2019/031931

(56) References cited:
- US-A1- 2015 062 347
- US-A1- 2017 111 623
- US-B1- 8 553 103
- VLAD C. CARDEI ET AL: "Estimating the scene illumination chromaticity by using a neural network", JOURNAL OF THE OPTICAL SOCIETY OF AMERICA A, vol. 19, no. 12, 1 December 2002 (2002-12-01), page 2374, XP055367167, US ISSN: 1084-7529, DOI: 10.1364/JOSAA.19.002374
- SHI WU ET AL: "Deep Specialized Network for Illuminant Estimation", 17 September 2016 (2016-09-17), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 371 - 387, XP047355401, ISBN: 978-3-642-17318-9 [retrieved on 2016-09-17] * Sections 3 and 4.2 *
- SABINE SÜSSTRUNK AND CLÉMENT FREDEMBACH: "Enhancing the Visible with the Invisible: Exploiting Near-Infrared to Advance Computational Photography and Computer Vision", SID SYMPOSIUM 2010, SEATTLE, USA, SID, CAMPBELL, CA, USA, 23 May 2010 (2010-05-23), XP001565231,
- SIMONE BIANCO et al.: "Single and Multiple Illuminant Estimation Using Convolutional Neural Networks", ArXiv e-prints, 1508.00998, 11 December 2015 (2015-12-11), pages 1-14, XP055577049,
- CLEMENT FREDEMBACH et al.: "Illuminant estimation and detection using near-infrared", Digital Photography V, 19 January 2009 (2009-01-19), pages 1-11, XP055211124, DOI: 10.1117/12.806431

## Description

### Technical Field

Apparatuses and methods consistent with example embodiments relate relates to an image processing system and a method for detecting light sources in a multi-illuminated environment using a composite red-green-blue-infrared (RGB-IR) sensor.

### Background Art

The color of objects viewed in a scene is affected by the lighting conditions under which the scene is viewed. A viewer's eyes and brain compensate for different types of light. White object appears white to a viewer whether it is viewed in sunlight, or indoors under incandescent or fluorescent light. In cameras, an auto-white balance (AWB) function helps to compensate for different types of lighting, to render a white object white. Therefore, correct illuminant detection (light source detection) is an important part of accurately capturing any scene.

Illuminant estimation is a primary step during image processing in a camera that uses an AWB process to remove a color cast in an image and thus improve the color in the scene. Existing AWB processes uses only single light source or illuminant. Therefore, it is difficult to detect multiple illuminants using only a single red-green-blue (RGB) image, and thus using only a single RGB image provides incorrect detection of illuminant results in color cast. Existing methods also provide improved estimates of an illuminant only at the expense of processing time.

In the related art, a statistic-based method determines a single illuminant scenario using visible and near-infrared (NIR) spectrums. Data for the results are generated from a modified digital single lens reflex (DSLR) camera having a Bayer sensor with a NIR-cutoff filter removed manually from the sensor module. Camera can capture either visible or NIR light by placing an appropriate filter in front of the lens. The sensor does not have a specific IR pixel which can capture wavelength 850nm+/- 150nm. The system captures visible wavelengths (390nm ~ 700nm) with an IR-cutoff-filter. The system captures from visible to NIR spectrums (wavelength 390nm to 1200nm) when the NIR cut-off filter is removed manually. In the absence of an NIR cut-off filter, Bayer pixels receive some amount of NIR crosstalk along with the visible spectrum which is used for an illuminant estimation. Thus, this method faces challenges in multi-illuminant scenarios.

Another related art system proposes a learning-based technique using a convolutional neural network (CNN) for single and multiple illuminant scenarios. The system and the method utilize existing datasets from a Bayer sensor and use relighting techniques to synthetically generate multi-illuminant scenarios. The results are restricted two illuminant scenarios.

Another related art proposes local estimation method a Bayer sensor to improve detection in a multi-illuminant scenario.

Based on the related art, it is observed that the required sensor pixel characteristics are not explicitly addressed, which is essential for designing an accurate illuminant estimator. The applicability of illuminant detection methods for image sensors with visible and NIR pixels or in a dual sensor with separate visible and NIR pixel array or in single visible (e.g. RGB) sensor without NIR cut-off filter have not been exhaustively studied. Further, there is needed an illuminant detection system and method for a composite RGB-IR sensor without an TR-cut-off filter.

The above information is presented as background information only to assist with understanding of the disclosure. No determination has been made, and no assertion is made, as to whether any of the above might be applicable as prior art with regard to the disclosure. Clement Fredembach et al., "Illuminant estimation and detection using near-infrared", Digital Photography V, (2009-01-19), pages 1-11, XP055211124 discloses a method to estimate incident illumination. Vlad C. Cardei et al: "Estimating the scene illumination chromaticity by using a neural network", published in Journal of the Optical Society of America, vol. 19, no. 12, pages 2374-2386, discloses employing neural networks for mixed illuminant cases.

One or more example embodiments may address at least the above-mentioned problems and/or disadvantages and provide at least the advantages described below. According to an aspect of the invention, there is provided a method for detecting light sources in a multi-illuminated environment as set out in claim 1. According to another aspect of the invention, there is provided an electronic device as set out in claim 7.

Accordingly, one or more example embodiments may provide a system and a method for detecting light sources in a multi-illuminated environment using a composite red-green-blue-infrared (RGB-IR) sensor.

According to an aspect of an example embodiment, a method for detecting light sources in a multi-illuminated environment using a composite RGB-IR sensor, the method comprises steps of detecting, by the composite RGB-IR sensor, a multi-illuminant area using a visible raw image and a near-infrared (NIR) raw image of a composite RGBIR image, dividing the visible and the NIR raw images into a number of grid samples, extracting a plurality of illuminant features using a green/NIR pixel ratio and a Blue/NIR pixel ratio, estimating at least one illuminant feature for each grid sample by passing each grid sample through a convolution neural network (CNN) module using the extracted illuminant features, and smoothing each grid sample based on the estimated at least one illuminant feature.

The CNN module may learn the green/NIR and blue/NIR ratio and thus improves accuracy without using the ratio of red/NIR pixel by using only two components, green and blue pixel, from visible range, which helps in an improved differentiation among multiple illuminants using RGB and NIR information and also reduces memory usage in the detection unit.

The method may further comprise applying an auto-white-balance (AWB) to each of the smoothed grid sample.

The CNN may be trained with a pre-defined set of standard illuminants and natural lighting along with ground truth illuminant information.

The estimating at least one illuminant feature for each grid sample may comprise measuring an angular error of the RGB-IR image by comparing the estimated plurality of illuminant features with the pre-defined set of standard illuminants stored in the CNN, and selecting the at least one illuminant feature based on the measured angular error.

The providing the pre-defined set of standard illuminants to the CNN may comprise capturing a single image using the RGB-IR sensor, separating the image into at least an R layer, a G layer, a B layer, and an IR layer, dividing each of an input RGB and an input NIR image into patches of a pre-defined size, and providing the CNN with a pre-defined sized input image and a corresponding known illuminant estimate.

The illuminant may comprise one or more light sources present in a scene captured by the RGB-IR sensor. The one or more light sources may include, but are not limited to: fluorescent light, tungsten light, and the like.

According to an aspect of an example embodiment, a user equipment (UE) is provided for detecting light sources in a multi-illuminated environment using a composite RGB-IR sensor. The UE comprises a composite RGB-IR sensor adapted for detecting a multi-illuminant area using a visible raw image and an NIR raw image from of a composite RGBIR image, and an image processor adapted for dividing each of the visible raw image and the NIR raw image into a number of grid samples, extracting a plurality of illuminant features based on a green/NIR pixel ratio and a blue/ NIR pixel ratio, and estimating at least one illuminant feature for each grid sample by passing each grid sample through a CNN module using the extracted illuminant features.

The foregoing has outlined, in general, various example aspects and is to serve as an aid to better understanding the more complete detailed description which is to follow. In reference to such, there is to be a clear understanding that the embodiments described herein are merely exemplary. It is intended that any other advantages and objects that become apparent or obvious from the detailed description or illustrations contained herein are within the scope of the present Application.

### Brief Description of Drawings

The above and other example aspects, features and advantages of example embodiments will be more apparent from the following description taken in conjunction with the accompanying drawings, in which:
FIG. 1 is a flow chart illustrating a method for detecting light sources in a multi-illuminated environment using a composite red-green-blue-infrared (RGB-IR) sensor, according to an example embodiment.
FIG. 2 is a schematic diagram illustrating pixel layout of a composite image sensor, according to an example embodiment.
FIG. 3 is a flow chart illustrating a detailed flow of a method for detecting light sources in a multi-illuminated environment using a composite RGB-IR sensor, according to an example embodiment.
FIG. 4 is a schematic diagram illustrating comparisons among different types of light sources, according to an example embodiment.
FIG. 5 is a schematic diagram illustrating a case of using a mixed lighting, according to an example embodiment.
FIG. 6 is a schematic diagram illustrating a case of using mixed lighting, according to another embodiment
FIG. 7 is a schematic diagram illustrating a case of using mixed lighting, according to another embodiment.

Throughout the drawings, it should be noted that like reference numbers are used to depict like elements, features, and structures.

The following description with reference to the accompanying drawings is provided to assist in a comprehensive understanding of various embodiments as defined by the claims It includes various specific details to assist in that understanding, but these are to be regarded as merely exemplary. Accordingly, those of ordinary skill in the art will recognize that various changes and modifications of the various embodiments described herein can be made without departing from the scope. In addition, descriptions of well-known functions and constructions may be omitted for clarity and conciseness.

The terms and words used in the following description and claims are not limited to the bibliographical meanings, but are merely used by the inventor to enable a clear and consistent understanding. Accordingly, it should be apparent to those skilled in the art that the following description of various embodiments is provided for illustration purposes only and not for the purpose of limiting the disclosure as defined by the appended claims.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

It is to be understood that the singular forms "a," "an," and "the" include plural referents unless the context clearly dictates otherwise. Thus, for example, reference to "a component surface" includes reference to one or more of such surfaces. It is further understood that the terms "includes", "comprises", "including" and/or "comprising" when used in this disclosure, specify the presence of stated features, integers, steps, operations, elements and/or components, but do not preclude the presence or addition of one or more other features integers, steps, operations, elements, components, and/or groups thereof. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Example embodiments provide a method according to claim 1 and a device according to claim 7 for detecting light sources in a multi-illuminated environment using a composite red-green-blue-infrared (RGB-IR) sensor, wherein the system can be any of image capturing devices such as, but not limited to, camera, mobile phone, laptop, tablet, personal digital assistant (PDA), and the like. A person having ordinarily skilled in the art can understand that the described example embodiments use cases are for better understanding and illustration, but do not limit to scope.

In view of the above discussion of the related art, there is a need for a system and a method that uses an average of two illuminants to overcome the limitations of the related art systems. Further, there is a need for a system and a method that detects multi-illuminants using composite RGB-IR sensor without an IR cut-off filter

According to an example embodiment, a method is provided for detecting light sources in a multi-illuminated environment using a composite RGB-IR sensor. The method comprises the composite RGB-IR sensor detecting a multi-illuminant area using a visible raw image and a near-infrared (NIR) raw image of a composite RGBIR image. The user captures one or more images and the composite RGBIR sensor of a user equipment (UE) receives the one or more images. Upon receiving and processing, the RGB-IR sensor identifies that there are multi-illuminant areas present in the visible raw image. Further, the composite RGB-IR sensor also processes the image to obtain an NIR raw image and a composite RGBIR image and identifies presence of multi-illuminant areas. In an example embodiment, the illuminant comprises one or more light sources present in a scene being captured.

Further, the method comprises dividing the visible and the NIR raw images into a number of grid samples. Based on the identification, the RGB-IR sensor divides the visible and NIR raw images into number of grid samples. In an example embodiment, the number or size of the grid samples depends on at least one parameter including, but not limited to, image size, processing time, performance, and the like. In another example embodiment, the sampling of the visible and the NIR raw images is performed using at least one of, but not limited to, grid-based sampling, segmentation-based sampling, sparse sampling, and the like. A person having ordinary skill in the art can understand that any known image sampling method can be used for sampling the visible and NIR raw images, without departing from the scope of the example embodiments.

Further, the method comprises extracting a plurality of illuminant features using a green/NIR pixel ratio and a blue/NIR pixel ratio. From the sampled visible and NIR raw images, plurality of illuminant features can be extracted using green/NIR pixel ratio and a blue/NIR pixel ratio. In another embodiment, plurality of illuminant features can be extracted using inverse pixel ratios, NIR/green and NIR/blue, without departing from the scope. Further, the method comprises estimating at least one illuminant feature for each grid sample by passing each grid sample through a convolution neural network (CNN) module using the extracted illuminant features. A person of ordinary skill in the art can understand a CNN module and its workings, and thus a detailed description is not included herein. According to an example embodiment, the CNN is trained with a pre-defined set of standard illuminants and natural lighting along with ground truth illuminant information, wherein different types of illuminants include, but are not limited to, variants of tungsten, variants for fluorescent, daylight, and the like.

In an example embodiment, the CNN module learns the green/NIR pixel ratio and blue/NIR ratio and thus improves accuracy without requiring the use of a red/NIR pixel ratio. This method uses only two components of the visible range, the green and blue pixels, which helps in a better differentiation of multiple illuminants using RGB and NIR information and also reduces memory usage in the detection unit.

In an example embodiment, estimating at least one illuminant feature for each grid sample comprises measuring an angular error of the RGBIR image by comparing the estimated plurality of illuminant features with the pre-defined set of standard illuminants stored in the CNN, and selecting the at least one illuminant feature based on the measured angular error.

In another example embodiment, providing the pre-defined set of standard illuminants to the CNN comprises capturing a single image from the RGB-IR sensor, separating the image into at least four layers R, G, B, IR, dividing an input RGB image and an input NIR image into patches of a pre-defined size, and providing the CNN with a pre-defined size input image and a corresponding illuminant estimate; where the illuminant estimate of each patch is known as they are captured under controlled lighting conditions. In an example embodiment, the patch size for the input RGB and NIR images can be 4 blocks of 32 pixels x 32 pixels. In another example embodiment, the input RGB and NIR image patches can be of any known size, as would be understood by one of ordinary skill in the art.

Further, the method comprises smoothing each grid sample based on the estimated at least one illuminant feature. Based on the estimation performed by the CNN module, each grid of the visible and NIR raw images are smoothed based on the estimated at least one illuminant feature.

In an example embodiment, the method further comprises applying an auto-white-balance (AWB) on each of the smoothed grid samples. Upon smoothing each of the grid samples, AWB is applied to each of the grid samples.

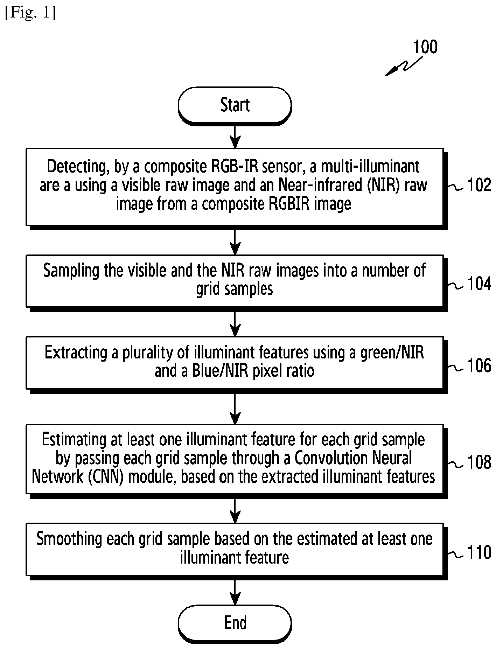

FIG. 1 is a flow chart 100 illustrating a method for detecting light sources in a multi-illuminated environment using a composite RGB-IR sensor, according to an example embodiment. According to the flow chart 100, at operation 102, the composite RGB-IR sensor detects a multi-illuminant area using a visible raw image and a NIR raw image from a composite RGBIR image. According to another example embodiment, an image processor may be configured to detect the multi-illuminant area using the visible raw image and the NIR raw image of the composite RGBIR image. Further, at operation 104, the visible and the NIR raw images are divided into a number of grid samples.

Further, at operation 106, a plurality of illuminant features are extracted using a green/NIR pixel ratio and a blue/NIR pixel ratio. Further, at operation 108, at least one illuminant feature for each grid sample is estimated by passing each grid sample through a CNN module using the extracted illuminant features. Further, at operation 110, each grid sample is smoothed based on the estimated at least one illuminant feature.

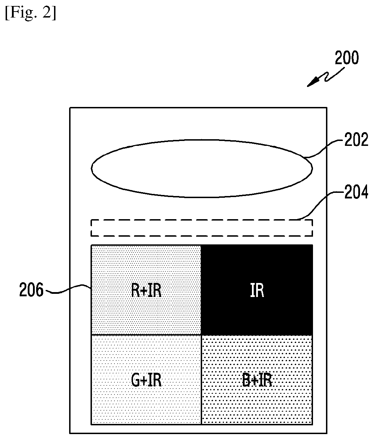

FIG. 2 is a schematic diagram 200 illustrating a pixel layout of a composite image sensor, according to an example embodiment. According to FIG. 2, the diagram 200 comprises a lens 202, an infrared (IR) cut filter 204 and an image sensor 206. According to another example embodiment, the diagram 200 may not comprise the IR cut filter 204. When a pixel of a composite image is monitored under the composite image sensor, then four layers can be observed including a red IR layer, a green IR layer, a blue IR layer, and an IR layer.

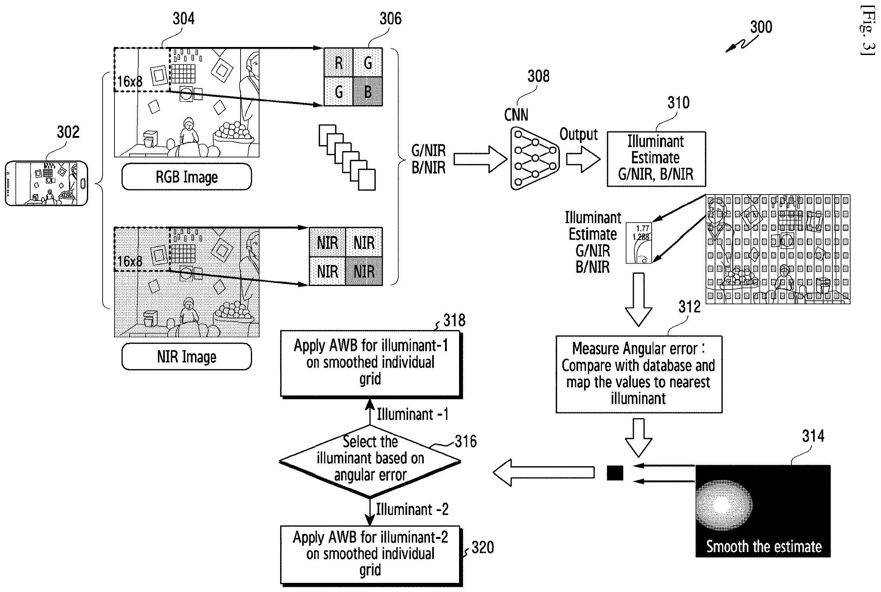

FIG. 3 is a flow chart 300 illustrating a detailed flow of a method for detecting light sources in a multi-illuminated environment using a composite RGB-IR sensor, according to an example embodiment. According to the flow chart 300, at operation 302, a camera unit of a mobile phone with a composite image sensor provides visible and NIR images in a single frame, upon capturing one or more images. At operation 304, an NIR image can be separated from the composite image, wherein the composite image can be a RGB image with RGB values for each pixel, and the NIR image comprises IR values for each pixel. The images can have a resolution of 16 pixels x 8 pixels, or any other resolution as would be understood by one of skill in the art.

At operation 306, for the separated RGB and NIR images, an average value of each patch can be identified. Further, at operation 308, from the obtained average value of each patch, values of green NIR (GNIR), and blue NIR (BNIR) are extracted and provided for the CNN to obtain ratio of pixel values.

At operation 310, the output obtained from the CNN provides illuminant estimates for GNIR and BNIR. At operation 312, an angular error is measured by comparing the illuminant estimate with value stored in a database, and the values are mapped to the nearest illuminant. Based on the measured angular error, at operation 314, the illuminant estimate is smoothed.

The smoothed image can be obtained, and at operation 316, the composite sensor of the image checks which illuminant needs to be selected based on the angular error. Based on the angular error, either illuminant 1 or illuminant 2 can be selected. If illuminant 1 is selected, then at operation 318, AWB can be applied to the smoothed individual grid. If illuminant 2 is selected, then at operation 320, AWB can be applied to the smoothed individual grid.

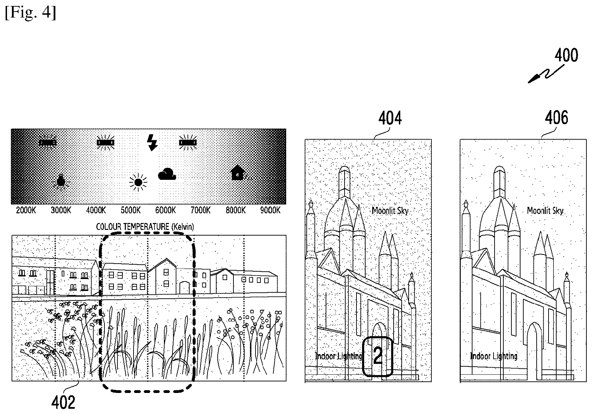

FIG. 4 is a schematic diagram 400 illustrating a comparison between different types of light sources, according to an example embodiment. According to FIG. 4, an original image 402 is captured during daylight. According to an example embodiment, even though, there is only one illumination source in the image, the composite image sensor identifies different temperatures present in the image 402 and each shade is due to a different light source. Based on the different temperatures in the image, the composite image sensor identifies an illuminant estimate using CNN. Further, the composite image sensor smooths the image based on the identified illuminant estimate and applies AWB to the image to obtain the corrected image.

Further, FIG. 4 illustrates a changing of the scene color based on the light source, according to an example embodiment. According to FIG. 4, the composite image sensor identifies the illuminant source and changes the color based on the illuminant. In the first image 404, the composite image sensor identifies two light sources: a light source from the moonlit sky and another light source from indoor light. The composite image sensor references the indoor light source and identifies the illuminant estimate based on the indoor light. Upon identifying the illuminant estimate, the white balance of the image can be adjusted based on tungsten or another indoor light, such as fluorescent light.

In the second image 406, the composite image sensor identifies the moonlit sky as the illuminant source and identifies the illuminant estimate based on the moonlit sky. Upon identifying the illuminant estimate, the white balance of the image can be adjusted based on light from a moonlit sky.

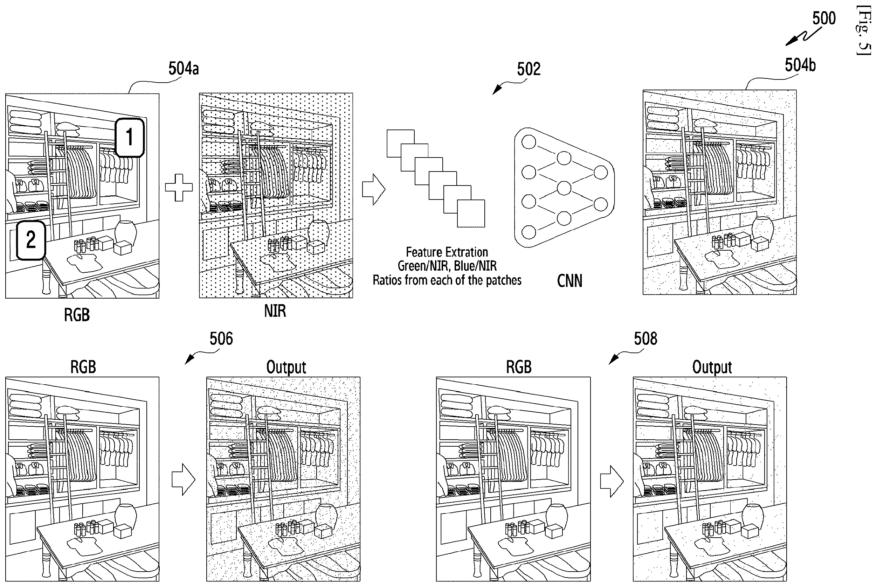

FIG. 5 is a schematic diagram 500 illustrating a case of using a mixed lighting, according to an example embodiment. According to the FIG. 5, in an example embodiment as shown in operation 502, an image is received by a composite image sensor of a user equipment (UE). Upon receiving the image, the composite image sensor identifies two illumination sources in RGB frame 504a of the image: one from candles present in the room, and another from daylight. The composite image sensor obtains a NIR frame for the image. Based on the obtained RGB and NIR frames, features are extracted that include, but are not limited to, green/NIR, blue/NIR ratios from each patch and the like. For the extracted patch, the CNN can be applied to obtain an illuminant estimate. Based on the obtained illuminant estimate, the composite image sensor attempts to find a balance between a tungsten approach and a fluorescent approach, and based on the identified balance, the image can be smoothed and correction can be done in the image to obtained corrected image 504b.

In another example embodiment, as shown in operation 506, upon performing the CNN and obtaining an illuminant estimate, the composite image sensor identifies tungsten as the prominent illuminant source in the image. Based on the identified illuminant source, the composite image sensor applies an auto-white balance method to the RGB frame of the image to smooth the image and correct it according to the identified tungsten illuminant source.

In another example embodiment, as shown in operation 508, upon performing the CNN and obtaining an illuminant estimate, the composite image sensor identifies fluorescent light as prominent illuminant source in the image. Based on the identified illuminant source, the composite image sensor applies the AWB method to the RGB frame of the image to smooth the image and correct it according to the identified fluorescent illuminant source.

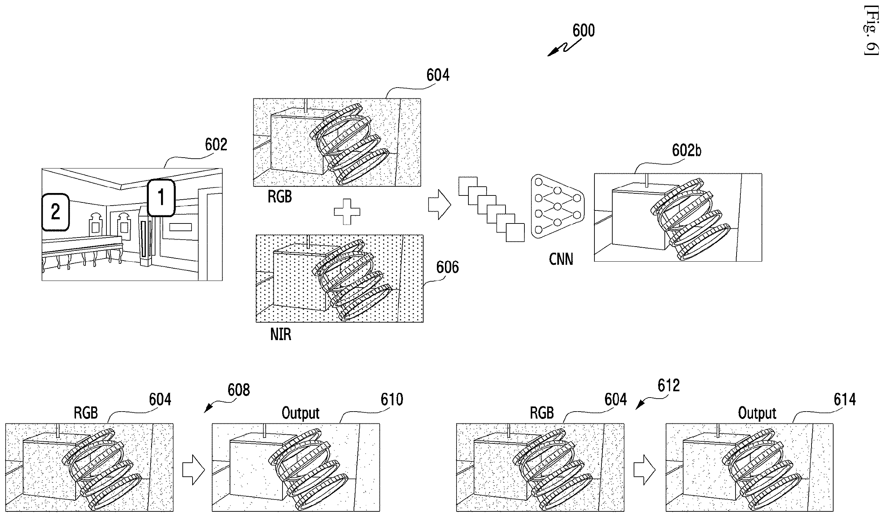

FIG. 6 is a schematic diagram 600 illustrating a case of using mixed lighting, according to another example embodiment. According to the FIG. 6, an image 602 of a jewelry shop is received by a composite image sensor of a UE. Upon receiving the image, the composite image sensor identifies two illumination sources :a tungsten source and a fluorescent source. The composite image sensor obtains an RGB frame 604 and an NIR frame 606 for the image 602. Based on the obtained RGB frame 604 and NIR frame 606, features are extracted that include, but are not limited to, green/ NIR, blue/NIR ratios from each patch and the like. For the extracted patch, the CNN can be applied to obtain an illuminant estimate. Based on the obtained illuminant estimate, the composite image sensor attempts to find a balance between a tungsten approach and a fluorescent approach, and based on the identified balance, the image can be smoothed and correction can be done in the image to obtain corrected image 602b.

In another example embodiment, as shown in operation 608, upon performing the CNN on the RGB frame 604, and obtaining an illuminant estimate, the composite image sensor identifies tungsten as the prominent illuminant source in the image 602. Based on the identified illuminant source, the composite image sensor applies the AWB method to the RGB frame 604 of the image 602 to smooth the image 602 and correct it according to the identified tungsten illuminant source to obtain corrected image 610.

In another example embodiment, as shown in operation 612, upon performing the CNN and obtaining an illuminant estimate, the composite image sensor identifies fluorescent light as the prominent illuminant source in the image 602. Based on the identified illuminant source, the composite image sensor applies the auto-white balance method to the RGB frame 604 of the image 602 to smooth the image 602 and correct it according to the identified fluorescent light illuminant source to obtain corrected image 614.

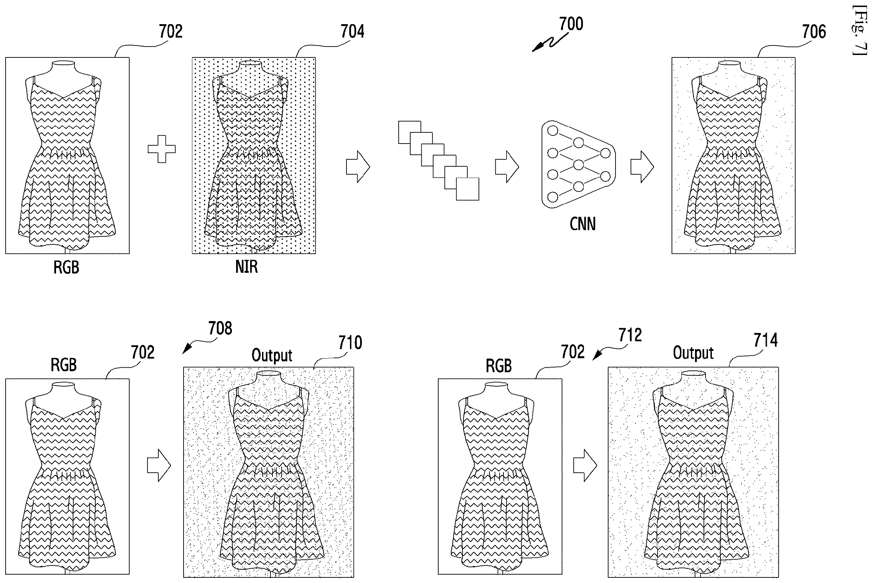

FIG. 7 is a schematic diagram 700 illustrating a case of using mixed lighting, according to another example embodiment. According to the FIG. 7, an image of a dress is received by a composite image sensor of a UE. Upon receiving the image, the composite image sensor identifies two illumination sources: a tungsten source and a fluorescent source. The composite image sensor obtains an RGB frame 702 and an NIR frame 704 for the image.

Based on the obtained RGB frame 702 and the NIR frame 704, features are extracted that include, but are not limited to, green/NIR, blue/NIR ratios from each patch and the like. For the extracted patch, the CNN can be applied to obtain an illuminant estimate. Based on the obtained illuminant estimate, the composite image sensor attempts to find a balance between a tungsten approach and a fluorescent approach, and based on the identified balance, the image can be smoothed and correction can be done in the image to obtain corrected image 706.

In another example embodiment, as shown in operation 708, upon performing the CNN on the RGB frame 702, and obtaining an illuminant estimate, the composite image sensor identifies tungsten as the prominent illuminant source in the image. Based on the identified illuminant source, the composite image sensor applies the auto-white balance method to the RGB frame 702 of the image to smooth the image and correct it according to the identified tungsten illuminant source to obtain corrected image 710.

In another example embodiment, as shown in operation 712, upon performing the CNN and obtaining an illuminant estimate, the composite image sensor identifies fluorescent light as the prominent illuminant source in the image. Based on the identified illuminant source, the composite image sensor applies auto-white balance method to the RGB frame 702 of the image to smooth the image and correct it according to the identified fluorescent illuminant source to obtain corrected image 714.

The present example embodiments have been described; it will be evident that various modifications and changes may be made to these embodiments without departing from the scope of the various embodiments. Furthermore, blocks, which may be referred to as the various devices, modules, and the like described herein, may be enabled and operated using hardware circuitry, for example, complementary metal oxide semiconductor-based logic circuitry, firmware, software and/or any combination of hardware, firmware, and/or software embodied in a machine readable medium. For example, the various electrical structures and methods may be embodied using transistors, logic gates, and electrical circuits, such as application specific integrated circuit. The circuit constituting a block may be implemented by dedicated hardware, or by a processor (e.g., one or more programmed microprocessors and associated circuitry), or a combination of dedicated hardware to perform some functions of the block and a processor to perform other functions of the block.

While the disclosure has been shown and described with reference to various example embodiments thereof, it will be understood by those skilled in the art that various changes in form and details may be made therein without departing from the scope as defined by the appended claims.

## Claims

1. A method for detecting light sources in a multi-illuminated environment, the method comprising:
providing (302), by a composite RGB-IR sensor, a single frame, upon capturing one or more images;
dividing (304) the single frame into a plurality of grid samples of a pre-defined size;
obtaining (306) a visible raw image and a near-infrared (NIR) raw image corresponding to each of the plurality of grid samples;
determining (308) an average value for each of the plurality of grid samples of the visible raw image and for each of the plurality of grid samples of the NIR raw image;
extracting a green/NIR pixel ratio and a blue/NIR pixel ratio using the average value of each grid sample;
estimating (310) at least one illuminant feature for each of the plurality of grid samples by passing the green/NIR pixel ratio and the blue/NIR pixel ratio estimated corresponding to the each of the plurality of grid samples through a convolution neural network (CNN) module which learns only two components of the green/NIR pixel ratio and the blue/NIR pixel ratio without a red/NIR ratio;
identifying (312) a prominent light source among a plurality of light sources in the single frame based on illumination features estimated for the plurality of grid samples;
processing (314) an image of the single frame based on at least one illuminant feature corresponding to the prominent light source; and
displaying the processed image on a display panel of an electronic device.

2. The method of claim 1, wherein the processing the image of the single frame based on the at least one illuminant feature corresponding to the prominent light source comprises:
smoothing each of the plurality of grid samples based on the at least one illuminant feature corresponding to the prominent light source; and
applying an auto-white-balance (AWB) to each of the smoothed grid samples.

3. The method of claim 1, further comprises providing a pre-defined set of standard illuminants to the CNN.

4. The method of claim 1, wherein the dividing the single frame into a plurality of grid samples of the pre-defined size comprises using at least one of a grid-based sampling, a segmentation-based sampling, and a sparse sampling.

5. The method of claim 1, wherein the CNN is trained with a pre-defined set of standard illuminants and natural lighting and ground truth illuminant information.

6. The method of claim 1, wherein the estimating at least one illuminant feature comprises :
measuring an angular error of the image by comparing the estimated at least one illuminant feature with the pre-defined set of standard illuminants stored in the CNN; and
selecting the at least one illuminant feature based on the measured angular error.

7. An electronic device for detecting light sources in a multi-illuminated environment, the electronic device comprises:
a composite red-green-blue-infrared (RGB-IR) sensor configured to provide a single frame, upon capturing one or more images; and
an image processor configured to:
divide (304) the single frame into a plurality of grid samples of a pre-defined size;
determine (308) an average value for each of the plurality of grid samples of the visible raw image and for each of the plurality of grid samples of the NIR raw image;
extract a green/NIR pixel ratio and a blue/NIR pixel ratio using the average value of each grid sample;
estimate (310) at least one illuminant feature for each of the plurality of grid samples by passing the green/NIR pixel ratio and the blue/NIR pixel ratio estimated corresponding to the each of the plurality of grid samples through a convolution neural network (CNN) module which learns only two components of the green/NIR pixel ratio and the blue/NIR pixel ratio without a red/NIR ratio;
identify (312) a prominent light source among a plurality of light sources in the single frame based on illumination features estimated for the plurality of grid samples;
process (314) an image of the single frame based on the at least one illuminant feature corresponding to the prominent light source; and
display the processed image on a display panel of the electronic device.

8. The electronic device of claim 7, wherein the image processor is further configured to:
smooth each of the plurality of grid samples based on the at least one illuminant feature corresponding to the prominent light source; and
apply an auto-white-balance (AWB) to each of the smoothed grid samples.

9. The electronic device of claim 7, wherein the image processor is further configured to provide a pre-defined set of standard illuminants to the CNN.

10. The electronic device of claim 7, wherein the processor is further configured to divide the single frame into the plurality of grid samples of the pre-defined size by using at least one of a grid-based sampling, a segmentation-based sampling, and a sparse sampling.

11. The electronic device of claim 7, wherein the CNN is trained with a pre-defined set of standard illuminants and natural lighting and ground truth illuminant information.

12. The electronic device of claim 7, wherein the image processor is further configured to estimate the at least one illuminant feature for each of the plurality of grid samples by:
measuring an angular error of the image by comparing the estimated at least one illuminant feature with the pre-defined set of standard illuminants stored in the CNN; and
selecting the at least one illuminant feature based on the measured angular error.

## Patentansprüche

1. Verfahren zum Erkennen von Lichtquellen in einer mehrfach beleuchteten Umgebung, wobei das Verfahren umfasst:
Liefern (302) eines Einzelbildes durch einen zusammengesetzten RGB-IR-Sensor beim Erfassen eines oder mehrerer Abbilder;
Aufteilen (304) des Einzelbildes in eine Vielzahl von Rastermustern einer vordefinierten Größe;
Erhalten (306) eines sichtbaren Rohbildes und eines Nahinfrarot (NIR)-Rohbildes entsprechend jedes der Vielzahl von Rastermustern;
Bestimmen (308) eines Durchschnittswertes für jedes der Vielzahl von Rastermustern des sichtbaren Rohbildes und für jedes der Vielzahl von Rastermustern des NIR-Rohbildes;
Extrahieren eines Pixelverhältnisses von grün zu NIR und eines Pixelverhältnisses von blau zu NIR unter Verwenden des Durchschnittswerts jedes Rastermusters;
Schätzen (310) mindestens eines Lichtartmerkmals eines jeden der Vielzahl von Rastermustern durch Durchleiten des Pixelverhältnisses von grün zu NIR und des Pixelverhältnisses von blau zu NIR, die entsprechend jedes der Vielzahl von Rastermustern geschätzt wurden, durch ein neuronales Faltungsnetzwerk-Modul (CNN-Modul), das nur zwei Komponenten des Pixelverhältnisses von grün zu NIR und des Pixelverhältnisses von blau zu NIR ohne ein Verhältnis von rot zu NIR lernt;
Identifizieren (312) einer markanten Lichtquelle unter einer Vielzahl von Lichtquellen in dem Einzelbild auf der Grundlage der für die Vielzahl von Rastermustern geschätzten Beleuchtungsmerkmale;
Verarbeiten (314) eines Abbildes des Einzelbildes auf der Grundlage von mindestens einem Lichtartmerkmal, das der markanten Lichtquelle entspricht; und
Anzeigen des verarbeiteten Abbildes auf einem Anzeigefeld einer elektronischen Vorrichtung.

2. Verfahren nach Anspruch 1, wobei das Verarbeiten des Abbildes des Einzelbildes auf der Grundlage des mindestens einen der markanten Lichtquelle entsprechenden Lichtartmerkmals Folgendes umfasst:
Glätten jedes der Vielzahl von Rastermustern auf der Grundlage des mindestens einen Lichtartmerkmals, das der markanten Lichtquelle entspricht; und
Anwenden eines automatischen Weißabgleichs (AWB) auf jedes der geglätteten Rastermuster.

3. Verfahren nach Anspruch 1, ferner umfassend das Bereitstellen eines vordefinierten Satzes von Standardlichtarten für das CNN.

4. Verfahren nach Anspruch 1, wobei das Aufteilen des Einzelbildes in eine Vielzahl von Rastermustern der vordefinierten Größe das Verwenden mindestens eines von rasterbasierter Abtastung, segmentierungsbasierter Abtastung und komprimierter Abtastung umfasst.

5. Verfahren nach Anspruch 1, wobei das CNN mit einem vordefinierten Satz von Standardlichtarten und natürlichen Beleuchtungs- und Ground-Truth-Lichtartinformationen trainiert wird.

6. Verfahren nach Anspruch 1, wobei das Schätzen mindestens eines Lichtartmerkmals Folgendes umfasst:
Messen eines Winkelfehlers des Abbildes durch Vergleichen des geschätzten mindestens einen Lichtartmerkmals mit dem vordefinierten Satz von im CNN gespeicherten Standardlichtarten; und
Auswählen des mindestens einen Lichtartmerkmals auf der Grundlage des gemessenen Winkelfehlers.

7. Elektronische Vorrichtung zum Erkennen von Lichtquellen in einer mehrfach beleuchteten Umgebung, wobei die elektronische Vorrichtung Folgendes umfasst:
einen zusammengesetzten Rot-Grün-Blau-Infrarot-Sensor (RGB-IR-Sensor), der eingerichtet ist, um bei der Aufnahme eines oder mehrerer Abbilder ein Einzelbild zu liefern; und
einen Bildprozessor, der eingerichtet ist, um:
das Einzelbild in eine Vielzahl von Rastermustern mit einer vordefinierten Größe aufzuteilen (304);
den Durchschnittswert für jedes der Vielzahl von Rastermustern des sichtbaren Rohbildes und für jedes der Vielzahl von Rastermustern des NIR-Rohbildes zu bestimmen (308);
ein Pixelverhältnis von grün zu NIR und ein Pixelverhältnis von blau zu NIR unter Verwendung des Durchschnittswerts der einzelnen Rastermuster zu ermitteln;
mindestens ein Lichtartmerkmal für jedes der Vielzahl von Rastermustern zu schätzen (310), indem das Pixelverhältnis von grün zu NIR und das Pixelverhältnis von blau zu NIR, die entsprechend jedes der Vielzahl von Rastermustern geschätzt wurden, durch ein neuronales Faltungsnetzwerk-Modul (CNN-Modul) durchgeleitet werden, das nur zwei Komponenten des Pixelverhältnisses von grün zu NIR und des Pixelverhältnisses von blau zu NIR ohne ein Verhältnis von rot zu NIR lernt;
eine markante Lichtquelle unter einer Vielzahl von Lichtquellen in dem Einzelbild auf der Grundlage der für die Vielzahl von Rastermustern geschätzten Beleuchtungsmerkmale zu identifizieren (312);
ein Abbild des Einzelbildes auf der Grundlage von mindestens einem Lichtartmerkmal, das der markanten Lichquelle entspricht, zu verarbeiten (314); und
das verarbeitete Abbild auf einem Anzeigefeld der elektronischen Vorrichtung anzuzeigen.

8. Elektronische Vorrichtung nach Anspruch 7, wobei der Bildprozessor ferner eingerichtet ist, um:
jedes der Vielzahl von Rastermustern auf der Grundlage des mindestens einen Lichtartmerkmals, das der markanten Lichtquelle entspricht, zu glätten; und
einen automatischen Weißabgleich (AWB) auf jedes der geglätteten Rastermuster anzuwenden.

9. Elektronische Vorrichtung nach Anspruch 7, wobei der Bildprozessor ferner eingerichtet ist, um dem CNN einen vordefinierten Satz von Standardlichtarten zu liefern.

10. Elektronische Vorrichtung nach Anspruch 7, wobei der Prozessor ferner eingerichtet ist, um das Einzelbild in die Vielzahl von Rastermustern der vordefinierten Größe aufzuteilen, indem er mindestens eines von rasterbasierter Abtastung, segmentierungsbasierter Abtastung und komprimierter Abtastung verwendet.

11. Elektronische Vorrichtung nach Anspruch 7, wobei das CNN mit einem vordefinierten Satz von Standardlichtarten und natürlichen Beleuchtungs- und Ground-Truth-Lichtartinformationen trainiert wird.

12. Elektronische Vorrichtung nach Anspruch 7, wobei der Bildprozessor ferner eingerichtet ist, um das mindestens eine Lichtartmerkmal für jedes der Vielzahl von Rastermustern zu schätzen, indem er:
einen Winkelfehler des Abbildes durch Vergleichen des geschätzten mindestens einen Lichtartmerkmals mit dem vordefinierten Satz von im CNN gespeicherten Standardlichtarten misst; und
das mindestens eine Lichtartmerkmal auf der Grundlage des gemessenen Winkelfehlers auswählt.

## Revendications

1. Procédé de détection de sources lumineuses dans un environnement multi-éclairé, le procédé comprenant :
la fourniture (302), par un capteur composite RVB-IR, d'une trame unique, lors de la capture d'une ou plusieurs images ;
la division (304) de la trame unique en une pluralité d'échantillons de grille d'une taille prédéfinie;
l'obtention (306) d'une image brute visible et d'une image brute proche infrarouge (NIR) correspondant à chacun de la pluralité d'échantillons de grille ;
la détermination (308) une valeur moyenne pour chacun de la pluralité d'échantillons de grille de l'image brute visible et pour chacun de la pluralité d'échantillons de grille de l'image brute NIR;
l'extraction d'un rapport de pixels vert/NIR et d'un rapport de pixels bleu/NIR en utilisant la valeur moyenne de chaque échantillon de grille ;
l'estimation (310) d'au moins une caractéristique d'éclairage pour chacun de la pluralité d'échantillons de grille en faisant passer le rapport de pixels vert/NIR et le rapport de pixels bleu/NIR estimé correspondant à chacun de la pluralité d'échantillons de grille à travers un module de réseau neuronal à convolution (CNN ) qui n'apprend que deux composantes du rapport de pixels vert/NIR et du rapport de pixels bleu/NIR sans un rapport rouge/NIR ;
l'identification (312) d'une source lumineuse prédominante parmi une pluralité de sources lumineuses dans la trame unique sur la base de caractéristiques d'éclairage estimées pour la pluralité d'échantillons de grille ;
le traitement (314) d'une image de la trame unique sur la base d'au moins une caractéristique d'éclairage correspondant à la source lumineuse prédominante ; et
l'affichage de l'image traitée sur un panneau d'affichage d'un dispositif électronique.

2. Procédé selon la revendication 1, dans lequel le traitement de l'image de la trame unique sur la base d'au moins une caractéristique d'éclairage correspondant à la source lumineuse prédominante comprend :
le lissage de chacun de la pluralité d'échantillons de grille sur la base d'au moins une caractéristique d'éclairage correspondant à la source lumineuse prédominante ; et
l'application d'une balance des blancs automatique (AWB) à chacun des échantillons de grille lissés.

3. Procédé selon la revendication 1, comprenant en outre la fourniture d'un ensemble prédéfini d'éclairages standard au CNN.

4. Procédé selon la revendication 1, dans lequel la division de la trame unique en une pluralité d'échantillons de grille de la taille prédéfinie comprend l'utilisation d'au moins un parmi un échantillonnage basé sur une grille, un échantillonnage basé sur la segmentation et un échantillonnage clairsemé.

5. Procédé selon la revendication 1, dans lequel le CNN est entraîné avec un ensemble prédéfini d'éclairages standard et des informations d'éclairage naturel et d'éclairage de réalité de terrain.

6. Procédé selon la revendication 1, dans lequel l'estimation d'au moins une caractéristique d'éclairage comprend :
la mesure d'une erreur angulaire de l'image en comparant au moins une caractéristique d'éclairage estimée avec l'ensemble prédéfini d'éclairages standard stocké dans le CNN ; et
la sélection d'au moins une caractéristique d'éclairage sur la base de l'erreur angulaire mesurée.

7. Dispositif électronique pour détecter des sources lumineuses dans un environnement multi-éclairé, le dispositif électronique comprend :
un capteur composite rouge-vert-bleu-infrarouge (RVB-IR) configuré pour fournir une trame unique, lors de la capture d'une ou plusieurs images ; et
un processeur d'image configuré pour :
diviser (304) la trame unique en une pluralité d'échantillons de grille d'une taille prédéfinie ;
déterminer (308) une valeur moyenne pour chacun de la pluralité d'échantillons de grille de l'image brute visible et pour chacun de la pluralité d'échantillons de grille de l'image brute NIR ;
extraire un rapport de pixels vert/NIR et un rapport de pixels bleu/NIR en utilisant la valeur moyenne de chaque échantillon de grille ;
estimer (310) au moins une caractéristique d'éclairage pour chacun de la pluralité d'échantillons de grille en faisant passer le rapport de pixels vert/NIR et le rapport de pixels bleu/NIR estimé correspondant à chacun de la pluralité d'échantillons de grille à travers un module de réseau neuronal à convolution (CNN ) qui n'apprend que deux composantes du rapport de pixels vert/NIR et du rapport de pixels bleu/NIR sans un rapport rouge/NIR ;
identifier (312) une source lumineuse prédominante parmi une pluralité de sources lumineuses dans la trame unique sur la base de caractéristiques d'éclairage estimées pour la pluralité d'échantillons de grille ;
traiter (314) une image de la trame unique sur la base d'au moins une caractéristique d'éclairage correspondant à la source lumineuse prédominante ; et
afficher l'image traitée sur un panneau d'affichage du dispositif électronique.

8. Dispositif électronique selon la revendication 7, dans lequel le processeur d'image est en outre configuré pour :
lisser chacun de la pluralité d'échantillons de grille sur la base d'au moins une caractéristique d'éclairage correspondant à la source lumineuse prédominante ; et
appliquer une balance des blancs automatique (AWB) à chacun des échantillons de grille lissés.

9. Dispositif électronique selon la revendication 7, dans lequel le processeur d'image est en outre configuré pour fournir un ensemble prédéfini d'éclairages standard au CNN.

10. Dispositif électronique selon la revendication 7, dans lequel le processeur est en outre configuré pour diviser la trame unique en la pluralité d'échantillons de grille de la taille prédéfinie en utilisant au moins un parmi un échantillonnage basé sur une grille, un échantillonnage basé sur la segmentation et un échantillonnage clairsemé.

11. Dispositif électronique selon la revendication 7, dans lequel le CNN est entraîné avec un ensemble prédéfini d'éclairages standard et d'informations d'éclairage naturel et d'éclairage de réalité de terrain.

12. Dispositif électronique selon la revendication 7, dans lequel le processeur d'image est en outre configuré pour estimer la au moins une caractéristique d'éclairage pour chacun de la pluralité d'échantillons de grille par :
la mesure d'une erreur angulaire de l'image en comparant au moins une caractéristique d'éclairage estimée avec l'ensemble prédéfini d'éclairages standard stocké dans le CNN ; et
la sélection d'au moins une caractéristique d'éclairage sur la base de l'erreur angulaire mesurée.
